Europäisches Patentamt

(19) European Patent Office

Office européen des brevets

(11) Veröffentlichungsnummer : **0 356 613 B1**

(12) **EUROPÄISCHE PATENTSCHRIFT**

(45) Veröffentlichungstag der Patentschrift :
27.11.91 Patentblatt 91/48

(21) Anmeldenummer : 89105168.2

(22) Anmeldetag : 22.03.89

(51) Int. Cl.⁵ : **F16L 59/04, F16L 59/16**

(54) **Verfahren zur Herstellung einer demontierbaren Isolierung.**

(30) Priorität : 06.06.88 DE 3819229

(43) Veröffentlichungstag der Anmeldung :
07.03.90 Patentblatt 90/10

(45) Bekanntmachung des Hinweises auf die
Patenterteilung :
27.11.91 Patentblatt 91/48

(84) Benannte Vertragsstaaten :
AT BE CH DE ES FR GB GR IT LI LU NL SE

(56) Entgegenhaltungen :
CH-A- 561 388
FR-A- 2 465 947
GB-A- 352 640

(73) Patentinhaber : **Rheinhold & Mahla AG**
**Gneisenaustrasse 15**
**W-8000 München 50 (DE)**

(72) Erfinder : **Zemanek, Jiri**
**Mergenthalerstrasse 1**
**W-8000 München 60 (DE)**
Erfinder : **Timpert, Manfred**
**Schetterstrasse 52**
**W-4235 Schermbeck (DE)**
Erfinder : **Rudolph, Christian, Dr. Ing.**
**Memelstrasse 9a**
**W-4250 Bottrop (DE)**

(74) Vertreter : **Michelis, Theodor, Dipl.-Ing. et al**
**Tattenbachstrasse 9**
**W-8000 München 22 (DE)**

## Beschreibung

Die Erfindung bezieht sich auf ein Verfahren zur Herstellung einer demontierbaren Isolierung von nichtbegehbaren Hohlräumen von warmgehenden Anlagen, insbesondere Rohrleitungen, Armaturen und Behältern, die mit Abstand von einem äußeren Blechmantel umgeben sind und bei dem der Hohlraum zwischen der zu isolierenden Anlage und dem äußeren, demontierbaren Blechmantel mit schüttfähigem, kleinteiligem Isoliermaterial verfüllt wird.

Ein derartiges Verfahren ist beispielsweise aus der GB-A-352640 bekannt. Hierbei werden die Hohlräume mit dem schüttfähigem Isoliermaterial durch Einblasen desselben verfüllt, wodurch auch schwer zugängliche Hohlräume sicher ausgefüllt werden können.

Nachteilig bei diesem Verfahren ist jedoch, daß einmal bei einer erforderlichen Demontage dieser Isolierung diese im allgemeinen verloren ist und zum anderen, daß eine solche Isolierung an schwer zugänglichen, z.B. sehr hoch gelegenen Rohrleitungen oder Apparateteilen nur schwer anzubringen ist.

Der Erfindung liegt daher die Aufgabe zugrunde, eine Isolierung zu schaffen, die einmal leicht herstellbar ist und zum anderen nach ihrer ggf. erforderlichen Demontage wieder verwendet oder bei vorliegender gleichartiger Geometrie an anderen Stellen eingesetzt werden kann.

Zur Lösung dieser Aufgabe ist erfindungsgemäß vorgesehen, daß dem Hohlraum zusätzlich ein temperaturbeständiges, das Isoliermaterial benetzendes und aushärtbares Bindemittel zugeführt wird.

Dabei ist es besonders zweckmäßig, wenn das Isoliermaterial mit dem Bindemittel über entsprechende Öffnungen im Blechmantel in den Hohlraum eingeblasen wird.

Bei einer solchen Isolierung bei dem das Isoliermaterial vor Einbringen in den Hohlraum oder gleichzeitig mit einem dieses Isoliermaterial benetzenden Bindemittels versetzt wird, ergibt sich nach der Aushärtung eine starre Isolierhülle, die entsprechend dem gewählten Material relativ locker ist und eine hohe Isolationswirkung aufweist.

In Weiterbildung der Erfindung kann nach Aushärten des Bindemittels und Entfernen des Blechmantels die verfestigte Isolierung durch entsprechende Axial- und ggfs. Radialschnitte in herausnehmbare Formteil unterteilt werden.

Damit ergibt sich der wesentliche Vorteil einer solchen Isolierung, nämlich daß sie sehr leicht demontierbar und anschließend wiederverwendbar ist oder aber auch daß an leichtzugänglichen Stellen derartige Isolationsformteile hergestellt werden, die dann an anderen sonst schwerzugänglichen Stellen gleicher Isolationsvolumengeometrie eingesetzt werden können.

Bei einer zu isolierenden Rohrleitung wird zweckmäßigerweise jeweils ein Abschnitt zwischen zwei auf die Rohrleitung aufgesetzten ringförmigen Abstandshaltern gesondert mit dem Isoliermaterial und dem Bindemittel verfüllt.

Bei einer zu isolierenden Armatur oder Flansch ist es zweckmäßig, wenn zwischen zwei stirnseitig abgeschotteten Rohrleitungsisolierabschnitten der zu isolierende Abschnitt zunächst mit einem Glasgewebe abgedeckt und anschließend der Hohlraum zwischen Glasgewebe und Blechmantel mit Isolierung verfüllt wird.

Bei einem zu isolierenden Behälterkopf kann unterhalb des Behälterdomes ein ringförmiger Abstandshalter am zylindrischen Behälterteil angebracht und anschließend der verbleibende Hohlraum zwischen Behälterdom und Blechabdeckung mit Isoliermaterial und Bindemittel verfüllt werden.

Zweckmäßigerweise werden als Isoliermaterial ein Fasermaterial mit relativ kurzer Faserlänger oder auch Mineralwollgranulat in Form von Steinwollgranulat oder Glasfasergranulat oder einem ähnlichen Material verwendet. Es ist aber auch möglich als Isoliermaterial Perlite oder Vermiculite zu verwenden.

Als Bindemittel eignet sich besonders Wasserglas. Es sind aber auch andere schnell aushärtende und temperaturfeste Bindemittel oder Kleber einsetzbar.

Anhand einer schematischen Zeichnung sind Ausführungsbeispiele von mit nach dem erfindungsgemäßen Verfahren isolierten Anlagenteilen näher erläutert. Dabei zeigen :

Fig. 1    einen Längsschnitt durch eine isolierte Rohrleitung,
Fig. 2    die entsprechende Isolierung eines Rohrkrümmers,
Fig. 3    einen Längsschnitt durch den Flanschabschnitt einer Rohrleitung mit aufgebracher Isolierung und
Fig. 4    die Isolierung eines Behälterkopfes.

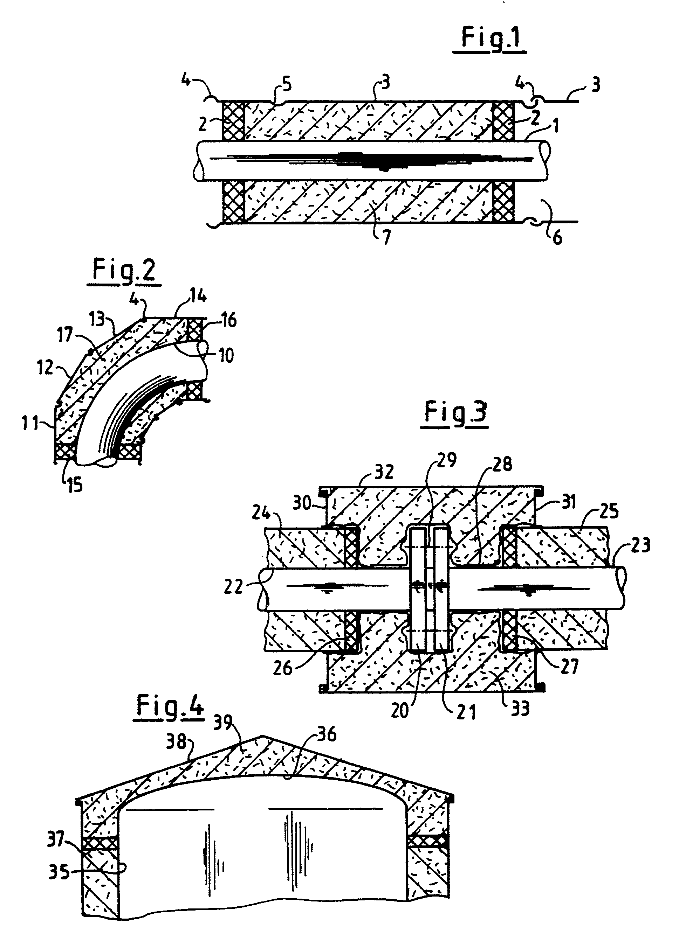

Wie man aus Fig. 1 ersieht sind auf eine Rohrleitung 1 in vorgegebenen Abständen ringförmige Abstandshalter 2 aufgesetzt, die beispielsweise aus Mineralfaserscheiben oder aus metallischen oder keramischen Stegen bestehen können. Auf diesen Abstandshaltern 2 sind dann ein äußerer Blechmantel 3 aufgebracht, der aus einzelnen Schüssen jeweils etwa entsprechend der Länge zwischen zwei Abstandshaltern 2 bestehen kann, wobei die einzelnen Blechmäntel 3 über entsprechende Sicken 4 miteinander verbunden sind. Dieser

2

Blechmantel 3 ist nunmehr an einer geeigneten Stelle mit einer verschließbaren Bohrung 5 versehen, die zweckmäßigerweise geringfügig größer als der Außendurchmesser der Einblasdüse einer nicht näher dargestellten Einblasmaschiene ist.

Über diese Bohrung 5 wird dann in den Hohlraum 6 zwischen der zu isolierenden Rohrleitung 1 dem äußeren Blechmantel 3 und den beiden seitlichen Abstandshaltern 2 ein mit einem Bindemittel versetztes kleinteiliges Isoliermaterial 7 eingeblasen. Dieses Isoliermaterial kann dabei aus Mineralwollfasern oder -granulat, z.B. Steinwollfasern- oder Glasfasern oder aber einem Granulat diese Mineralien oder auch aus Perlitten oder Vermiculitten bestehen, die z.B. mit Wasserglas als Bindemittel vor dem Einblasen oder während des Einblasens benetzt sind. Nach einer dichten Verfüllung des Hohlraumes 6 _ wobei die jeweils für einen Hohlraum erforderliche Isoliermaterialmenge vorher ermittelt werden kann _ bildet sich nach Aushärten des Bindemittels eine lockere aber starre Isolierschale. Da die einzelnen Fasern oder Partikel des Isoliermaterials nur an ihrer Oberfläche mit Bindemittel oder Kleber benetzt sind, findet also auch nur eine punktförmige Verbindung zwischen den einzelnen Isoliermaterialfaser oder -partikeln statt, so daß die gleiche luftdurchsetzte Verfüllung des entsprechenden Hohlraumes wie ohne Bindemittel erhalten wird.

Der große Vorteil einer so erhaltenen verfestigten Isolierschale besteht darin, daß nach Abnehmen des Blechmantels 3 und Auftrennen der Isolierung 7 durch entsprechende Radial und Axialschnitte die Isolierung in einzelnen Formteilen entnommen werden kann, so daß nach einer evtl. Reparatur der Rohrleitung diese Isolierung wieder eingesetzt und somit wieder verwendet werden kann.

Ein anderer wesentlicher Vorteil besteht aber auch darin, daß damit an gut zugänglichen Stellen Isolier-Formteile erhalten werden können, die dann an anderen sonst schwerzugänglichen Stellen gleicher Geometrie eingesetzt werden können, wodurch die Montage der Isolierung erheblich erleichtert wird.

In Fig. 2 ist die Isolierung eines entsprechenden Rohrbogens 10 gezeigt. Der entsprechende Blechmantel ist hierbei z.B. in vier zylindrische Oberschüsse 11, 12, 13 und 14 mit entsprechend schrägen Stirnflächen unterteilt, die wiederum über entsprechende Sicke 4 miteinander verbunden sind. Zwischen dem Rohrbogen 10 und den Blechschüssen 11-14 sowie den Abstandshaltern 15 und 16 ist dann der verbleibende Hohlraum 17 in gleicher Weise mit kleinteiligem Isoliermaterial das mit Bindemittel versetzt ist, ausgefüllt worden. Nach Verfestigung des Bindemittels lassen sich auch hier entsprechende Formteile für eine Wiedermontage an anderer Stelle erhalten.

Besonders zweckmäßig ist das erfindungsgemäße Verfahren auch bei Isolierung von Armaturen oder Flanschen im Rohrleitungsverlauf, wie das in Fig. 3 am Beispiel einer Rohrkupplung gezeigt ist. Hierbei soll der Bereich der über Flansche 20 und 21 miteinander verbundenen Rohrleitungen 22 und 23 isoliert werden. Die Rohrleitungen 22 und 23 sind dabei bis kurz vor die Flasche 20 und 21 bereits mit einer entsprechenden Isolierung 24 und 25 geschützt, die stirnseitig über starre Scheiben oder Abstandshalter 26 und 27 abgeschottet ist. Der noch verbleibende freie Bereich der Rohrleitungen 22 und 23 sowie der Flanche 20 und 21 ist zunächst mit einem Glasgewebe 28 abgedeckt, um insbesondere den Bereich der Flanschverbindungen 29 sauber zu halten und leichte und einfache Demontage zugewährleisten. Auf die Isolierungen 24 und 25 ist dann ein Blechmantel, zwei- oder mehrteilig, bestehend aus Stirnscheiben 30 und 31 sowie der radial außen liegender Umhüllung aufgesetzt. Die seitlichen Enden des Glasgewebes 28 können dabei von den Ringen 30 und 31 verspannt und abdichtend gehalten werden.

Der somit gebildete Hohlraum zwischen dem Glasgewebe 28 und den beiden Scheiben 30 und 31 sowie dem radial außen liegenden Blechmantel 32 wird mit einer Isolierung 33 aus mit Bindemittel versetztem Isoliermaterial verfüllt und zumindest bis zur vollständigen Aushärtung dort belassen. Auch hiermit lassen sich besonders kompliziert geformte Formteile aus verfestigtem Isoliermaterial erhalten die an anderer Stelle gleicher Konfiguration eingesetzt werden können.

In Fig. 4 ist schließlich als weiteres Ausführungsbeispiel die entsprechende Isolierung eines Behälterkopfes gezeigt. Ein derartiger Behälterkopf besteht üblicherweise aus dem zylindrischen Behälterabschnitt 35 auf den ein gewölbter Behälterdom 36 aufgeschweißt ist. Zur Isolierung dieses oberen Bereiches ist zunächst ein ringförmiger Abstandshalter 37 im Bereich des oberen Endes des zylindrischen Behälterteils 35 aufgesetzt. Der verbleibende Hohlraum zwischen dem Behälterdom 36 und der beispielsweise kegelförmigen Blechabdeckung 38 wird dann in gleicher Weise mit einer Isolierung 39 aus mit Bindemittel verfestigbaren Isoliermaterial verfüllt und aushärten gelassen.

Die beschriebenen Ausführungsbeispiele zeigen nur einige Möglichkeiten der Ausbildung einer solchen sich verfestigenden Isolierung, die dann als Formteile auch an anderer Stelle eingesetzt werden können. Grundsätzlich ist dieses Verfahren an allen nicht begehbaren Hohlräumen von warmgehenden Anlagen einsetzbar, die einer entsprechenden Isolierung bedürfen.

EP 0 356 613 B1

## Patentansprüche

1. Verfahren zur Herstellung einer demontierbaren Isolierung von nichtbegehbaren Hohlräumen an warmgehenden Anlagen, insbesondere Rohrleitungen, Armaturen und Behältern, die mit Abstand von einem äußeren Blechmantel umgeben sind und bei dem der Hohlraum zwischen der zu isolierenden Anlage und dem äußeren, demontierbaren Blechmantel mit schüttfähigem, kleinteiligem Isoliermaterial verfüllt wird, dadurch gekennzeichnet, daß dem Hohlraum zusätzlich ein temperaturbeständiges, das Isoliermaterial benetzendes und aushärtbares Bindemittel zugeführt wird.

2. Verfahren nach Anspruch 1, dadurch gekennzeichnet, daß das Isoliermaterial mit dem Bindemittel über entsprechende Öffnungen im Blechmantel in den Hohlraum eingeblasen wird.

3. Verfahren nach Anspruch 1 oder 2, dadurch gekennzeichnet, daß nach Aushärten des Bindemittels und Entfernen des Blechmantels die verfestigte Isolierung durch entsprechende Axial- und Radialschnitte in herausnehmbare Formteile unterteilt wird.

4. Verfahren nach einem der Ansprüche 1 bis 3, dadurch gekennzeichnet, daß bei einer zu isolierenden Rohrleitung jeweils ein Abschnitt zwischen zwei auf die Rohrleitung aufgesetzten ringförmigen Abstandshaltern gesondert verfüllt wird.

5. Verfahren nach einem der Ansprüche 1 bis 3, dadurch gekennzeichnet, daß bei einer zu isolierenden Armatur oder Flansch zwischen zwei stirnseitig abgeschotteten Rohrleistungsisolierabschnitten der zu isolierende Abschnitt zunächst mit einem Glasgewebe abgedeckt und anschließend der Hohlraum zwischen Glasgewebe und Blechmantel mit Isolierung verfüllt wird.

6. Verfahren nach einem der Ansprüche 1 bis 3, dadurch gekennzeichnet, daß bei einem zu isolierenden Behälterkopf unterhalb des Behälterdomes ein ringförmiger Abstandshalter am zylindrischen Behälterteil angebracht und anschließend der verbleibenden Hohlraum zwischen Behälterdom und Blechabdeckung mit durch Bindemittel benetzten Isoliermaterial verfüllt wird.

7. Verfahren nach einem der Ansprüche 1 bis 6, dadurch gekennzeichnet, daß als Isoliermaterial Mineralwollfasern oder -granulat, Steinwollfasern, Glasfasern oder deren Granulat verwendet werden.

8. Verfahren nach einem der Ansprüche 1 bis 6, dadurch gekennzeichnet, daß als Isoliermaterial Perlite oder Vermiculite verwendet werden.

9. Verfahren nach Anspruch 7 oder 8, dadurch gekennzeichnet, daß als Bindemittel Wasserglas eingesetzt wird.

## Claims

1. A process for the production of a removable insulation means of inaccessible cavities of apparatus which becomes hot, in particular pipe-lines, armatures and containers which are surrounded at a distance by an external sheet metal casing and wherein the cavity between the apparatus which is to be insulated and the outer, dismountable sheet metal casing is filled with pourable, small-particled insulating material, characterised in that the cavity is additionally supplied with a heat-resistant bonding agent which wets the insulating arterial and can be hardened.

2. A process as claimed in Claim 1, characterised in that the insulating arterial, together with the bonding agent, is injected into the cavity through corresponding openings in the sheet metal casing.

3. A process as claimed in Claim 1 or 2, characterised in that following the hardening of the bonding agent and the removal of the sheet metal casing, the stabilised insulation means is sub-divided into removable shaped parts by means of corresponding axial and radial cuts.

4. A process as claimed in one of Claims 1 to 3, characterised in that in the case of a pipe-line which is to be insulated, a section between two annular spacers placed on the pipe-line is in each case individually filled.

5. A process as claimed in one of Claims 1 to 3, characterised in that in the case of an armature or flange which is to be insulated between two pipe-line insulating sections partitioned at their end sides, the section which is to be insulated is firstly covered with a glass fabric, whereupon the cavity between the glass fabric and the sheet metal casing is filled with insulation means.

6. A process as claimed in one of Claims 1 to 3, characterised in that in the case of a container head which is to be insulated, beneath the container dome an annular spacer is arranged on the cylindrical part of the container and then the remaining cavity between the container dome and the sheet metal covering is filled with insulating arterial wetted by bonding agent.

7. A process as claimed in one of Claim 1 to 6, characterised in that mineral wool fibres or granulate, rock wool fibres, glass fibres or the granulate thereof are used as insulating material.

8. A process as claimed in one of Claims 1 to 6, characterised in that perlite or vermiculite is used as insulat-

4

ing material.

9. A process as claimed in Claim 7 or 8, characterised in that water glass is used as a bonding agent.

## Revendications

1. Procédé de fabrication d'une isolation démontable de cavités difficilement accessibles d'installations convoyant un milieu thermique, notamment dans des conduits, des robinets et des cuves, qui sont entourées avec espacement d'une enveloppe extérieure en tôle et dans lequel la cavité entre l'installation à isoler et l'enveloppe extérieure, démontable en tôle, est garnie de matériau isolant en petits fragments et apte à s'écouler, caractérisé en ce qu'il consiste à envoyer, en outre, dans la cavité un agent liant, résistant à la chaleur, mouillant le matériau isolant et susceptible de durcir.

2. Procédé suivant la revendication 1, caractérisé en ce qu'il consiste à insuffler le matériau isolant avec le liant dans la cavité par des trous adéquats de l'enveloppe en tôle.

3. Procédé suivant la revendication 1 ou 2, caractérisé en ce qu'il consiste, après durcissement de l'agent liant et enlèvement de l'enveloppe en tôle, à subdiviser l'isolation solidifiée par des coupes axiales et radiales adéquates en pièces conformées qui peuvent être enlevées.

4. Procédé suivant l'une des revendications 1 à 3, caractérisé en ce qu'il consiste, dans le cas d'un conduit à isoler, à garnir séparément un tronçon entre deux entretoises annulaires posées sur le conduit.

5. Procédé suivant l'une des revendications 1 à 3, caractérisé en ce qu'il consiste, dans le cas d'un robinet ou vanne, ou d'une bride à isoler entre deux tronçons isolants du conduit cloisonnés du côté frontal, à recouvrir d'abord le tronçon à isoler d'un tissu de verre et à garnir ensuite d'isolant la cavité comprise entre le tissu en verre et l'enveloppe en tôle.

6. Procédé suivant l'une des revendications 1 à 3, caractérisé en ce qu'il consiste, dans le cas d'une tête de cuve à isoler, à monter une entretoise annulaire sur la partie cylindrique de la cuve, en-dessous du dôme de la cuve, et ensuite à garnir la cavité qui subsiste entre le dôme de la cuve et le couvercle en tôle, de matériau isolant mouillé par l'agent liant.

7. Procédé suivant l'une des revendications 1 à 6, caractérisé en ce qu'il consiste à utiliser, comme matériau isolant, des fibres en laine minérale ou des granulés en laine minérale, des fibres en laine de roche, des fibres de verre ou leurs granulés.

8. Procédé suivant l'une des revendications 1 à 6, caractérisé en ce qu'il consiste à utiliser, comme matériau isolant, de la perlite ou de la vermiculite.

9. Procédé suivant la revendication 7 ou 8, caractérisé en ce qu'il consiste à utiliser, comme agent liant, du verre soluble.

Fig.1

Fig.2

Fig.3

Fig.4